# EUROPEAN PATENT APPLICATION

(11) **EP 0 734 652 A1**
(43) Date of publication of application: **02.10.1996**
(21) Application number: 96200653.2
(22) Date of filing: 09.03.1996
(51) Int. Cl.: A21C 11/16, A21C 3/04

(54) **Pasta extrusion apparatus**

(30) Priority: 29.03.1995 IT MI950632
(71) Applicant: M.G. BRAIBANTI S.p.A., 20122 Milan0 (IT)
(72) Inventor: Capovilla, Andrea, 38060 Isera (Trento) (IT); Degli Angeli, Alessandro, 43100 Parma (IT)
(74) Representative: Appoloni, Romano

(57) **Abstract**

A pasta extrusion apparatus is described comprising an extruder connected to a chamber positioned upstream of a die provided with apertures, two rollers being provided in this chamber.

An advantage of the present invention is the facility for achieving uniform and temperature-controlled flow of dough upstream of the die.

## Description

This invention relates to a pasta extrusion apparatus.

The current system for producing long pasta comprises a suitably machined steel block positioned at the end of an extrusion screw and of such dimensions as to contain the forming die.

The purpose of this system, known as a "direct diffusion tube" system, is to diffuse the dough previously worked by the tank-extrusion screw system via suitable channels.

The die is located in the underlying part opposite the feed.

The diffuser tube can be fed at several points, depending on the machine capacity. Considering for example a diffuser tube with only one feed point, the dough is fed into a single central region and then has to extend over a width of about 1200 mm.

The system is static, and hence the dough moves into the appropriate channels by the effect only of the pressure exerted by the work of the extrusion screw.

These dough flow movements do not take place in a regular manner, for the following reasons:
a) the particular construction of the direct diffusion tube;
b) the considerable viscosity of the product to be diffused;
c) the presence of preferential flows due to different pressure points; and
d) different extrusion rates.

Because of these phenomena the feed to the die is irregular, with the result that the pasta is discharged non-linearly along the entire length of the die.

The consequence of this different discharge from the die is a variable length of the final product.

As a result, a considerable effort has to be expended in equalizing the length of the final product before this is fed to the drying stage.

The equalizing equipment is nothing more than a cutting system which cuts the pasta to a given length, and in so doing produces a greater or lesser quantity of off-cuts depending on the uniformity of the original length.

The off-cuts are again fed to the processing stage upstream of the direct diffusion tube. This addition is however not welcomed by pasta producers.

The object of the present invention is therefore to overcome the drawbacks of the known art.

This object is attained by a pasta extrusion apparatus comprising an extruder connected to a chamber positioned upstream of a die provided with apertures, characterised in that two rollers are provided in said chamber.

The main advantage of the present invention is uniform diffusion of the stream of dough, so solving the problem of the different pasta length and hence eliminating the need to insert a length equalizing device or at least considerably reducing the amount of off-cuts to be re-added before the die.

The structural and operational characteristics and advantages of the device according to the present invention will be more apparent from the detailed description given by way of non-limiting example with reference to the accompanying drawings, in which:

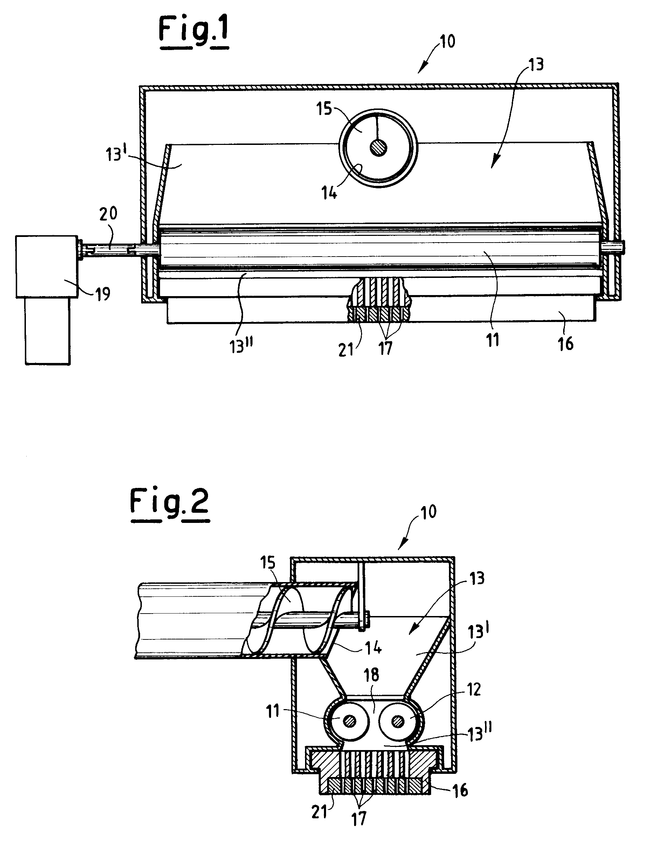

Figure 1 is a partly sectional elevation of the apparatus of the present invention;
Figure 2 is a cross-section through the apparatus shown in Figure 1.

An apparatus 10 according to the present invention comprises two independently driven rollers 11 and 12, positioned within a chamber 13 in correspondence with a discharge point 14 at the end of an extrusion screw or extruder 15, in the region upstream of a forming die 16. The die 16 comprises a series of channels 17 provided in a die plate 21 replaceable at will.

The chamber 13 can for example define a reception region 13' for the dough originating from the discharge end of the screw and a roller housing region 13'' positioned in proximity to the die.

The two rollers 11 and 12 act as feed rollers, with a variable gap 18 therebetween, and are rotated in opposite directions by a geared motor 19 coupled to them by a pair of relative extensions 20. The provision of the extensions 20, which are provided at their ends with universal joints, enables the distance between the axes of the rollers 11 and 12 to be adjusted to achieve the variable gap 18 enabling the die 16 to be fed with the chosen quantity of product.

The two rollers 11 and 12 can be temperature controlled, to achieve optimum temperature for the entire product.

The present invention has been developed and attained starting from the consideration that by achieving a suitable dynamic action, the system enables a linear movement to be obtained with a constancy enabling the die to be fed in an optimum and uniform manner.

Said rollers 11 and 12 play a role of primary importance, in that:
a) they enable uniform discharge to be achieved, by virtue of their action of increasing the thrust and distributing it along the entire length of the die, and
b) they enable the entire product passing through them to be temperature controlled.

Uniform discharge distribution is achieved in a manner similar to that which occurs when rolling pasta, in that the pair of rollers rotating in opposite directions favours linearity of the dough passing through them.

The dough arriving upstream of the rollers encounters a hindrance to its rotational movement, hence a part of it passes through the gap between the rollers, whereas the remainder is subjected to linear movement with a minimum distribution force along the entire length of the die mouth.

In this manner a processed product is obtained with regular and uniform discharge along the entire width of the apparatus, this product being under the best conditions for traversing the forming die with regular flow.

The said pair of rollers processes all the dough reaching the extrusion screw. Considering that the passage gap between said two rollers is only a few millimetres, the temperature of the two temperature-controlled rollers is transferred to all the product being processed, this assuming laminar flow on passing between the two rollers.

In systems of the known art, this temperature control is very irregular because of the large product thicknesses to be temperature-controlled.

The passage gap between the two rollers can be adjusted on the basis of processing requirements.

In this respect, at the commencement of processing, when the dough reaching the extrusion screw is not yet under optimum homogeneous conditions, the passage gap is set to maximum opening, so as to prevent high extrusion pressure peaks.

When the initial dough fraction has been discharged, the passage gap between the two rollers can be decreased, to achieve optimum adjustment on the basis of the dough consistency.

In this manner the subsequent very important dough temperature control stage is also optimized.

In this respect, during this processing stage in which the dough thicknesses become a minimum, a maximum level of temperature control is achieved.

As already stated, the main advantage of the apparatus according to the present invention is the uniform diffusion of the dough stream, so solving the problem of the differing pasta length.

This hence eliminates the need to insert an equalizing device, or at least considerably reduces the amount of off-cuts to be re-added before the die.

A further advantage of the device of the present invention is the facility for optimum dough temperature control.

This optimum temperature control is achievable because the dough thickness is much less than in devices of the known art, good temperature control of the two rollers being sufficient to set the dough to a uniform temperature.

## Claims

1. A pasta extrusion apparatus comprising an extruder connected to a chamber positioned upstream of a die provided with apertures, characterised in that two rollers are provided in said chamber.

2. An apparatus as claimed in claim 1, characterised in that the distance between the axes of the two rollers is variable.

3. An apparatus as claimed in claim 1, characterised in that the two rollers rotate in opposite directions.

4. An apparatus as claimed in claim 1, characterised in that the two rollers are temperature controlled.

5. An apparatus as claimed in claim 1, characterised in that said chamber comprises a reception region for the dough originating from the discharge end of the screw, and a roller housing region positioned in proximity to the die.
